(19) Europäisches Patentamt
European Patent Office
Office européen des brevets

(11) Veröffentlichungsnummer: **0 162 364**
**B1**

# (12) EUROPÄISCHE PATENTSCHRIFT

(45) Veröffentlichungstag der Patentschrift: **24.08.88**

(51) Int. Cl.⁴: **C 08 G 18/08**, C 08 G 18/80

(21) Anmeldenummer: **85105479.1**

(22) Anmeldetag: **06.05.85**

## (54) Verfahren zur Hertellung desaktivierter Suspensionen von feinteiligen Polyisocyanaten in höhermolekularen Verbindungen, desaktivierte Suspensionen und ihre Verwendung zur Polyurethanherstellung.

(30) Priorität: **18.05.84 DE 3418430**

(43) Veröffentlichungstag der Anmeldung: **27.11.85 Patentblatt 85/48**

(45) Bekanntmachung des Hinweises auf die Patenterteilung: **24.08.88 Patentblatt 88/34**

(84) Benannte Vertragsstaaten: **AT BE CH DE FR GB IT LI NL SE**

(56) Entgegenhaltungen:
**EP - A - 0 100 508**
**EP - A - 0 103 323**

(73) Patentinhaber: **BAYER AG, Konzernverwaltung RP Patentabteilung, D-5090 Leverkusen 1 Bayerwerk (DE)**

(72) Erfinder: **Hess, Heinrich, Dr., Körnerstrasse 5, D-5090 Leverkusen 1 (DE)**
Erfinder: **Grögler, Gerhard, Dr., von-Diergardt-Strasse 46, D-5090 Leverkusen 1 (DE)**
Erfinder: **Kopp, Richard, Dr., Wolfskaul 12, D-5000 Köln 80 (DE)**
Erfinder: **Barnes, James Michael, Bechhausen 60, D-5632 Wermelskirchen (DE)**

**EP 0 162 364 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Verfahren zur Herstellung von Suspensionen von feinteiligen, durch eine Oberflächenhülle in ihrer Reaktivität retardierten Polyisocyanaten in Polyolen und/oder Polyaminen mit aromatischen Aminogruppen, indem man

(a) ein festes, feinteiliges Polyisocyanat, suspendiert in

(b) einem oder mehreren Polyolen und/oder aromatischen Aminen mit Molekulargewichten von 400 bis 6000, gegebenenfalls Polyolen und/oder aromatischen Polyaminen mit Molekulargewichten von 60 bis 399 sowie gegebenenfalls Weichmachern und Lösungsmitteln, mit

(c) einer oder mehreren, zwei- oder mehrfunktionellen Verbindungen mit primären und/oder sekundären aliphatischen Aminogruppen und/oder $-CONHNH_2$-Gruppen, Hydrazin, Alkylhydrazinen, Guanidinen und/oder Amidinen mit einem Molekulargewicht von 32 bis 6000 in einer Menge von 0,1 bis 25 Gew.-% pro NCO-Gruppen der Komponenten (a) unter Ausbildung einer Oberflächenhülle um (a) umsetzt, dadurch gekennzeichnet, daß man der Suspension nach Ausbildung der Oberflächenhülle um (a) eine oder mehrere gegenüber der Komponente (c) acylierend, alkylierend oder neutralisierend wirkende Verbindungen (d) bei Temperaturen unterhalb der Schmelztemperatur der Komponente (a) in einer Menge zusetzt, welche der noch in der Suspension enthaltenen Komponente (c) höchstens etwa äquivalent ist.

Gegenstand der Erfindung sind auch verfahrensgemäß erhältliche Suspensionen und ihre Verwendung zur Polyurethanherstellung, insbesondere in Form von PU-Einkomponenten-Reaktivsystemen, die durch Einwirkung von Wärme und/oder Scherkräften und/oder Lösungsmitteln in Polyurethane übergeführt werden.

Die erfindungsgemäßen Suspensionen zeigen keine Zunahme der Aufdickungstemperatur bei ihrer Aushärtung zu Polyurethanen, insbesondere in großvolumigen Formkörpern.

Die Herstellung von bei Raumtemperatur lagerstabilen, hitzehärtbaren Mischungen aus einem festen, feinverteilt vorliegenden Polyisocyanat, das durch teilweise chemische Reaktion an der Teilchenoberfläche, bevorzugt mit aliphatischen Polyaminen, unter Bildung einer Polyharnstoff-Polymerschutzhülle desaktiviert ist, und in mindestens einer gegenüber Isocyanatgruppen reaktionsfähigen Verbindungen, z.B. höhermolekularen Polyolen und/oder Polyaminen suspendiert ist, ist bekannt. So werden nach der DE-A 3 230 757 (EP-A 103 323) durch Reaktionen mit «Amin-Stabilisatoren», wie Polyaminen, Hydrazin(en) oder Verbindungen mit $-CONHNH_2$-Endgruppen, mit Polyadditionsprodukten umhüllte, stabilisierte, feste Polyisocyanate mit einer retardierten Reaktivität hergestellt, wobei die Umhüllung im wesentlichen aus einer dünnen Schicht von Polyadditionsprodukten besteht, die durch Reaktion der NCO-Gruppen an der Oberfläche der festen Isocyanatteilchen (etwa 0,1 bis 25% aller NCO-Gruppen) mit den obengenannten aminofunktionellen Verbindungen gebildet wird. Infolge der Polyadduktumhüllung stellen die Polyisocyanatteilchen als Suspensionen in höhermolekularen Polyolen und/oder höhermolekularen Polyaminen sowie gegebenenfalls niedermolekularen Polyolen oder aromatischen Polyaminen unterhalb einer noch näher zu definierenden «Aufdickungstemperatur» lagerstabile Reaktivsysteme dar. Durch Aufsprengen der Polyadduktumhüllung, z.B. durch Scherkräfte, Einwirkung polarer Lösungsmittel oder Erwärmen über diese Aufdickungstemperatur treten die Polyisocyanate in Reaktion.

Die Hülle auf den festen Polyisocyanatteilchen ist je nach der Art der aminofunktionellen Verbindung unterschiedlich. Mit Polyaminen bilden sich Polyharnstoffumhüllungen, mit Hydrazin(en) bilden sich Polyhydrazodicarbonamid-Umhüllungen mit Verbindungen mit $-CONHNH_2$-Endgruppen, wie Dihydraziden, Bis-semicarbaziden, Bis-carbazinestern, Semicarbazidhydraziden oder Aminohydraziden, bilden sich noch komplexere Polyaddukte mit einer Vielzahl von unterschiedlich angeordneten –HN- und –CO-Gruppen in der Polymerkette. Entsprechend der DE-A 34 03 500 lassen sich auch mit Guanidinen bzw. Amidinen, welche keine gegenüber Isocyanaten reaktive H-Atome aufweisen, Polyadduktĥüllen auf den Isocyanaten erzeugen, welche gleichermaßen zu einer Retardierung der NCO-Reaktivität führen. Weitere Verfahren zur Herstellung von Polyisocyanaten retardierter Reaktivität werden in den DE-A 32 28 723, DE-A 32 28 724 und DE-A 32 28 670 angegeben.

Die in ihrer Reaktivität retardierten, feinteiligen Polyisocyanate gemäß Stand der Technik werden vorzugsweise durch Suspension in Polyolen und/oder Polyaminen sowie gegebenenfalls niedermolekularen Polyolen oder aromatischen Polyaminen, vorzugsweise in höhermolekularen Polyolen oder auch in höhermolekularen aromatischen Polyaminen hergestellt. Man erhält so direkt als Einkomponentenpolyurethane weiterverwendbare Suspensionen.

Diese Suspensionen besitzen eine gute Lagerstabilität selbst in Gegenwart hochwirksamer Polyurethankatalysatoren, auch bei erhöhter Temperatur, solange diese unterhalb der Aufdickungstemperatur liegt. Auch aromatische Diamine als Kettenverlängerer enthaltende PU-Reaktivsysteme dieser Art sind lagerstabil und zeigen bei ihrer Verarbeitung nach dem Gießverfahren eine stark verlängerte Topfzeit.

Die Aushärtung solcher Einkomponenten-Reaktivsysteme kann durch Erhitzen erfolgen, wobei oberhalb einer bestimmten Temperatur («Aufdickungstemperatur» bzw. «Aufdickungspunkt») eine schnelle Polyadditionsreaktion erfolgt. Durch einfache Variation der Reaktionsbedingungen bei der Umhüllung, z.B. der Reaktionstemperatur, des Suspensionsmediums oder der Art und Menge der zur Hüllenbildung verwendeten aminofunktionellen Verbindungen, läßt sich die «Aufdickungstemperatur» variieren.

Durch Erwärmen auf relativ niederer Temperaturen, bevorzugt $\geq 55$ °C, besonders bevorzugt 100 bis 135 °C, können die Einkomponenten-PU-Reaktivsysteme ausgehärtet werden.

Es hat sich jedoch gezeigt, daß besonders bei

der Herstellung von großvolumigen Formteilen aus derartigen Reaktivsystemen, z.B. bei Walzenbeschichtungen oder zylindrischen Formteilen mit großem Durchmesser, inhomogene Produkte mit schlechten mechanischen Eigenschaften erhalten werden. Die Ursache dafür ist vermutlich die langsame Verfestigung derartiger Einkomponenten-PU-Reaktivsysteme selbst oberhalb der «Aufdickungstemperatur», da die Wärme von der beheizten Wand zum Inneren durch die sich bildende Polyurethanschicht nur relativ langsam übertragen wird.

Aus diesem Grund kann bei großvolumigen Formkörpern ein flüssiger Kern zurückbleiben, der sich auch bei sehr langer Heizzeit nicht verfestigt. Erhöht man die Temperatur deutlich über die Aufdickungstemperatur, so kann man zwar eine vollständige Durchreaktion erreichen, aber im allgemeinen werden trotzdem uneinheitliche Formkörper erhalten, da im flüssigen Kern ein Teil des festen Polyisocyanats bereits sedimentiert hat. Das führt zu inhomogenen, teils übervernetzten (brüchig, harten), teils untervernetzten (weichen bis klebrigen) Polymerbereichen, die das großvolumige Formteil unbrauchbar machen. In manchen Fällen verbleiben auch Bereiche mit flüssigem Material, oder es werden Schlieren unterschiedlicher Festigkeit gebildet.

Aufgabe der vorliegenden Erfindung war es daher, lagerstabile, hitzehärtbare Suspensionen, wie sie in den genannten Literaturstellen beschrieben werden, bereitzustellen, die bei Aushärtung unter Wärmezufuhr eine rasche und gleichförmige Verfestigung ohne Änderung der Aufdickungstemperatur zeigen und gleichzeitig die oben beschriebenen Nachteile bei der Herstellung großvolumiger Formteile nicht mehr aufweisen. Diese Aufgabe konnte durch das erfindungsgemäße Verfahren gelöst werden, wobei sich noch weitere vorteilhafte Effekte einstellten, die an späterer Stelle der Beschreibung angeführt bzw. aus den Beispielen ersichtlich sind.

Bevorzugt ist es, die Komponenten (a), (b) und (c) in solchen Mengen einzusetzen, wie es einer üblichen Rezeptur der Einkomponenten-PU-Reaktivsysteme entspricht.

Die erfindungsgemäßen Suspensionen weisen einen NCO-Restgehalt von mindestens 75%, vorzugsweise 92%, besonders bevorzugt 97% und weniger als 99,9%, vorzugsweise weniger als 99,7%, der ursprünglich vorhandenen NCO-Gruppen der festen Polyisocyanate (a) auf.

Besonders bevorzugt sind erfindungsgemäße Suspensionen, deren Addukthülle unter Verwendung von aliphatischen Di- und/oder Polyaminen und/oder Hydrazin erhalten wurden, und welche höhermolekulare aromatische Polyamine sowie gegebenenfalls niedermolekulare aromatische Diamine als Komponenten (b) enthalten. Besonders bevorzugt sind auch Suspensionen, bei denen als Komponente (d) Polyisocyanate, insbesondere NCO-Prepolymere, bevorzugt aliphatische Polyisocyanate und besonders bevorzugt Diisocyanate zum Einsatz gekommen sind.

Ein weiterer Gegenstand ist auch die Verwendung der erfindungsgemäßen Suspensionen zur Herstellung von Polyurethanen, vorzugsweise in Form lagerstabiler Einkomponenten-Reaktivsysteme, enthaltend

A. Polyisocyanate,

B. höhermolekulare Polyhydroxyl- und/oder Polyaminoverbindungen,

C. gegebenenfalls niedermolekulare Kettenverlängerungsmittel,

D. gegebenenfalls Polyurethankatalysatoren und

E. gegebenenfalls übliche Hilfs- und Zusatzstoffe.

Besonders bevorzugt sind in diesem Zusammenhang Suspensionen der Polyisocyanate retardierter Reaktivität in höhermolekularen, aromatischen Polyaminen sowie gegebenenfalls niedermolekularen, aromatischen Diaminen, wobei als Verbindungen (c) aliphatische Di- und/oder Polyamine und als Verbindungen (d) aliphatische Di- und/oder Polyisocyanate eingesetzt wurden. Bevorzugt sind auch solche Suspensionen, bei deren Herstellung solche Mengen von Polyisocyanaten (a) und (d) und höhermolekularen und gegebenenfalls niedermolekularen Verbindungen (b) und (c) eingesetzt wurden, daß sie Einkomponenten-Reaktivsysteme darstellen, die direkt zu hochmolekularen Polyurethan(harnstoff)en abreagieren können. Werden als Komponenten (b) und (c) Amine verwendet, so sind keine Katalysatoren für die Aushärtung zum Polyurethan(harnstoff) erforderlich und die Aufdickungstemperatur bzw. die Aushärtungszeiten liegen niedriger als bei Polyolsystemen; ebenso werden sehr günstige Elastomereigenschaften erhalten.

Als Komponenten (a) für das erfindungsgemäße Verfahren sind alle Di- oder Polyisocyanate mit einem Schmelzpunkt oberhalb 40 °C, bevorzugt oberhalb 80 °C, besonders bevorzugt oberhalb 130 °C sowie deren Mischungen miteinander geeignet, wie sie in der EP-A 103 323, S. 22. beschrieben werden.

Als Beispiele für die einsetzbaren Polyisocyanate seine genannt:

| | |
|---|---|
| p-Xylylendiisocyanat | Fp.: 45–46 °C |
| 1,5-Diisocyanatomethylnaphthalin | 88–89 °C |
| 1,3-Phenylendiisocyanat | 51 °C |
| 1,4-Phenylendiisocyanat | 94–96 °C |
| α,α,α′,α′-Tetramethyl-p-xylylen-diisocyanat | 72 °C |
| 1-Methylbenzol-2,5-diisocyanat | 39 °C |
| 1,3-Dimethylbenzol-4,6-diisocyanat | 70–71 °C |
| 1,4-Dimethylbenzol-2,5-diisocyanat | 76 °C |
| 1-Nitrobenzol-2,5-diisocyanat | 59–61 °C |
| 1,4-Dichlorbenzol-2,5-diisocyanat | 134–137 °C |
| 1-Methoxybenzol-2,4-diisocyanat | 75 °C |
| 1-Methoxybenzol-2,5-diisocyanat | 89 °C |
| 1,3-Dimethoxybenzol-4,6-diisocyanat | 125 °C |
| Azobenzol-4,4′-diisocyanat | 158–161 °C |
| Diphenylether-4,4′-diisocyanat | 66–68 °C |
| Diphenylmethan-4,4′-diisocyanat | 42 °C |
| Diphenyl-dimethylmethan-4,4′-diisocyanat | 92 °C |
| Naphthalin-1,5-diisocyanat | 130–132 °C |
| 3,3′-Dimethylbiphenyl-4,4′-diisocyanat | 68–69 °C |
| Diphenylsulfid-4,4′-diisocyanat | 58–60 °C |
| Diphenylsulfon-4,4′-diisocyanat | 154 °C |
| 1-Methylbenzol-2,4,6-triisocyanat | 75 °C |
| 1,3,5-Trimethylbenzol-2,4,6-triisocyanat | 93 °C |
| Triphenylmethan-4,4′,4″-triisocyanat | 89–90 °C |
| 4,4′-Diisocyanato-(1,2)-diphenyl-ethan | 88–90 °C |

| | |
|---|---|
| dimeres 1-Methyl-2,4-phenylendiisocyanat | 156 °C |
| dimeres 1-Isopropyl-2,4-phenylendiisocyanat | 125 °C |
| dimeres 1-Chlor-2,4-phenylendiisocyanat | 177 °C |
| dimeres 2,4'-Diisocyanato-diphenylsulfid | 178–180 °C |
| dimeres Diphenylmethan-4,4'-diisocyanat | |
| 3,3'-Diisocyanato-4,4'-dimethyl-N,N'-diphenylharnstoff | |
| 3,3'-Diisocyanato-2,2'-dimethyl-N,N'-diphenylharnstoff | |
| N,N'-Bis-[4-(4-Isocyanatophenylmethyl)-phenyl]-harnstoff | |
| N,N'-Bis-[4-(2-Isocyanatophenylmethyl)-phenyl]-harnstoff | |

Erfindungsgemäß besonders bevorzugt werden dimeres 1-Methyl-2,4-diisocyanatobenzol, dimeres 4,4'-Diisocyanatodiphenylmethan, 3,3'-Dimethyl-4,4'-diisocyanatodiphenyl, der 3,3'-Diisocyanato-4,4'-dimethyl-N,N'-diphenylharnstoff, der Bis-N,N'-[4-(4-Isocyanatophenylmethyl)-phenyl]-harnstoff, 1,5-Naphthalindiisocyanat und 1,4-Phenylendiisocyanat.

Als Verbindungen (c) werden z.B. zwei- oder mehrfunktionelle Verbindungen mit aliphatisch gebundenen, primären und/oder sekundären Aminogruppen und einem Molekulargewicht von 60 bis etwa 6000, vorzugsweise 60 bis 3000, eingesetzt. Es sind dies niedermolekulare und/oder höhermolekulare primäre und/oder sekundäre Polyamine, bevorzugt mit Funktionalitäten von 2 bis 3, oder ihre Mischungen, besonders bevorzugt aber Diamine. Die Aminogruppen sind dabei an aliphatischen Gruppen (einschließlich cycloaliphatische, oder an den aliphatischen Rest von araliphatischen Gruppen) gebunden. Diese Di- und Polyamine können gegebenenfalls neben den Aminogruppen auch noch OH-Gruppen, tertiäre Aminogruppen, Ethergruppen, Thioethergruppen, Urethangruppen, Harnstoffgruppen, Carboxylgruppen, Carbonsäurealkylestergruppen, Sulfonatgruppen, Carboxylatgruppen oder Sulfonsäureestergruppen aufweisen.

Erfindungsgemäß einsetzbare Di- und Polyamine sind z.B. Ethylendiamin, 1,2- und 1,3-Propandiamin, 1,4-Butandiamin, 1,6-Hexandiamin, Neopentandiamin, 2,2,4- und 2,4,4-Trimethyl-1,6-diaminohexan, 2,5-Dimethyl-2,5-diaminohexan, 1,10-Decandiamin, 1,11-Undecandiamin, 1,12-Dodecandiamin, Bis-aminomethyl-hexahydro-4,7-methanoindan (TCD-Diamin), 1,3-Cyclohexandiamin, 1,4-Cyclohexandiamin, 1-Amino-3,3,5-trimethyl-5-aminomethylcyclohexan (Isophorondiamin), 2,4- und/oder 2,6-Hexahydrotoluylendiamin, 2,4'- und/oder 4,4'-Diaminodicyclohexylmethan, m- oder p-Xylylendiamin, Bis-(3-aminopropyl)-methylamin, Bis-N,N'-(3-aminopropyl)-piperazin und 1-Amino-2-aminomethyl-3,3,5-(3,5,5)-trimethyl-cyclopentan, 2,2-Dialkylpentan-1,5-diamine oder Triamine wie 1,5,11-Triaminoundecan, 4-Aminomethyl-1,8-diaminooctan, Lysinmethylester, cycloaliphatische Triamine gemäß DE-OS 2 614 244, 4,7-Dioxadecan-1,10-diamin, 2,4- und 2,6-Diamino-3,5-diethyl-1-methylcyclohexan und deren Gemische, alkylierte Diaminodicyclohexylmethane, z.B. 3,3'-Dimethyl-4,4'-diamino-dicyclohexylmethan oder 3,5-Diisopropyl-3',5'-diethyl-4,4'-diaminodicyclohexylmethan, perhydrierte Diaminonaphthaline, perhydrierte Diaminoanthrazene oder höherwertige Amine wie Diethylentriamin, Triethylentetramin, Pentaethylenhexamin, Dipropylentriamin, Tripropylentetramin, oder N,N'-Dimethylethylendiamin, 2,5-Dimethylpiperazin, 2-Methylpiperazin, Piperazin-(hydrat), 2-Hydroxyethylpiperazin oder 2-(2-Aminoethyl)-aminoethylsulfonsaures Natrium.

Anstelle dieser niedermolekularen aliphatischen Diamine (Molekulargewichte 60–399) oder im Gemisch hiermit können auch höhermolekulare aliphatische Di- und Polyamine mit Molekulargewichten ≥ 400 verwendet werden, wie sie z.B. durch reduktive Aminierung von Polyoxyalkylenglykolen mit Ammoniak nach BE-A-634 741 oder US-A-3 654 370 erhalten werden können. Weitere höhermolekulare Polyoxyalkylen-Polyamine können nach Methoden, wie sie in der Firmenschrift «Jeffamine, Polyoxypropylene Amines» von Texaco Chemical Co., 1978, aufgezählt werden, hergestellt werden, beispielsweise durch Hydrierung von cyanethylierten Polyoxypropylenglykolen (DE-A-1 193 671), oder durch Umsetzung von NCO-Prepolymeren mit Hydroxylgruppen aufweisenden Enaminen, Aldiminen oder Ketiminen und anschließende Hydrolyse gemäß DE-A-2 546 536. Geeignete höhermolekulare aliphatische Di- und Polyamine sind auch die nach DE-A-2 948 419 und DE-A-3 039 600 durch alkalische Hydrolyse von NCO-Prepolymeren (mit aliphatischen Diisocyanaten) mit Basen über die Carbamatstufe zugänglichen Polyamine. Diese höhermolekularen Polyamine besitzen Molekulargewichte von etwa 400 bis 6000, vorzugsweise 400 bis 3000 und besonders bevorzugt von 1000 bis 3000. Infolge ihres Aufbaus sind derartige höhermolekulare Polyamine zur Ausbildung einer nichtbrüchigen, «elastischen» Polyharnstoffumhüllung besonders geeignet. Sie werden daher vorzugsweise, gegebenenfalls in Mischung mit den niedermolekularen Di- und Polyaminoverbindungen, zur Umhüllung der Polyisocyanatteilchen eingesetzt.

Als weitere Verbindungen (c) kommen auch Hydrazin, Alkylhydrazine sowie N,N'-Dialkylhydrazine, vorzugsweise mit $C_1$–$C_6$-Alkylgruppen, die auch als weitere Substituenten Chlor- oder OH-Gruppen tragen können, und/oder zwei- oder mehrfunktionelle Verbindungen mit $-CO-NH-NH_2$-Endgruppen, und einem Molekulargewicht von 90 bis etwa 6000, vorzugsweise 90 bis 3000, in Frage. Es sind dies z.B. Hydrazin, bevorzugt als Hydrazinhydrat, alkylsubstituierte Hydrazine, z.B. Methylhydrazin, Ethylhydrazin, Hydroxyethyl-hydrazin oder N,N'-Dimethylhydrazin, Di- oder Polyhydrazine wie Carbodihydrazid, Hydracrylsäurehydrazid, Oxalsäuredihydrazid, Adipinsäuredihydrazid, Terephthalsäuredihydrazid, Isophthalsäurehydrazid oder Verbindungen mit Hydrazid- und Semicarbazid-, Carbazinester- oder Aminogruppen, z.B. β-Semicarbazidpropionsäurehydrazid, 2-Semicarbazidoethylencarbazinester, Aminoessigsäurehydrazid, β-Aminopropionsäurehydrazid oder Biscarbazinester oder Bissemicarbazide wie Ethylen-bis-carbazinester bzw. Ethylen-bissemicarbazid oder Isophoron-bis-semicarbazid. Bevorzugt werden Hydrazin und niedermolekulare

Verbindungen mit $-CO-NH-NH_2$-Gruppen mit Molekulargewichten von 90 bis 399 verwendet. Besonders bevorzugt ist Hydrazinhydrat und β-Semicarbazido-propionsäurehydrazid sowie Alkylenbissemicarbazide.

Auch durch Reaktion von festen, feinteiligen Polyisocyanaten mit offenkettigen, mono- oder bicyclischen Amidinen bzw. Guanidinen, welche keine gegenüber Isocyanaten reaktiven Wasserstoffatome aufweisen, können feste Polyisocyanate mit einer retardierten Reaktivität hergestellt werden, wobei die Oberflächenumhüllung im wesentlichen aus Mono- oder Polyadditionsprodukten – ungeklärter Struktur – von Isocyanaten und Amidin- bzw. Guanidin-Verbindungen in dünner Schicht gebildet wird. Die so gebildeten Umsetzungsprodukte sind stabil und werden erst bei hinreichender Temperaturerhöhung in die Ausgangskomponenten gespalten. Die Aufdickungstemperaturen von Suspensionen derart umhüllter Polyisocyanate liegen dabei in den meisten Fällen wesentlich tiefer als die Spalt- oder Deblockierungstemperatur von Uretdiondiisocyanaten bzw. üblichen blockierten Polyisocyanaten.

Die bei der thermischen Spaltung freiwerdenden Amidin- bzw. Guanidinverbindungen können für die anschließende PU-Herstellung als Katalysatoren wirken bzw. andere Reaktionen, z.B. die Uretdionringspaltung, auslösen. Guanidine und Amidine sind daher als Verbindungen (c) bevorzugt, insbesondere wenn als Komponente (b) Verbindungen mit aromatisch gebundenen Aminogruppen verwendet werden. Erst bei Erreichen einer bestimmten Temperatur (dem sogenannten Aufdickungspunkt) tritt eine rasche Reaktion der Komponenten zum Polyurethan(harnstoff) ein, welche durch die freigesetzten Amidine noch beschleunigt wird.

Geeignete offenkettige mono- oder bicyclische Amidin- bzw. Guanidinverbindungen werden in der DE-A-3 403 500 beschrieben.

Beispiele für offenkettige Amidine sind:
N,N-Dimethylformamidin, N,N-Dimethylacetamidin, N,N-Diethyl-formamidin, N,N,N'-Trimethylacetamidin, N,N-Dimethyl-N'-benzylacetamidin, N,N-Dicyclohexyl-N'-methylacetamidin, N,N-Dimethyl-N'-cyclohexyl-formamidin, N,N-Dimethyl-N'-tert.-butylformamidin.

Beispiele für die besonders bevorzugten monocyclischen Amidine sind:
1,2-Dimethyl-Δ2-imidazolin, 1-Methyl-2-phenyl-Δ2-imidazolin, 1(N)-Methyl-Δ2-imidazolin, 2-Benzylimino-N-methyl-caprolactam, 2-Butylimino-N-methyl-butyrolactam, 1,8-Diaza-bicyclo[5,3,0]-dec-7-en, 1,8-Diaza-bicyclo[5,4,0]-undec-7-en, 1,7-Diaza-bicyclo[4,4,0]-dec-6-en, 1,6-Diaza-bicyclo-[3,4,0]-non-5-en, 1,5-Diaza-bicyclo[4,3,0]-non-5-en, 1,14-Diaza-bicyclo[11,4,0]-heptadec-13-en, 1-(N)-Methyl-Δ2-tetrahydropyrimidin, 1-Cyclohexyl-2-methyl-Δ2-tetrahydropyrimidin, 1-Cyclohexyl-Δ2-tetrahydropyrimidin, 1-Benzyl-2-butyl-Δ2-tetrahydropyrimidin, 1-Methyl-2-methyl-Δ2-tetrahydropyrimidin, 1-Butyl-2-methyl-Δ2-tetrahydropyrimidin, 1-(2-Ethylhexyl)-2-methyl-Δ2-tetrahydropyrimidin, 1-Dodecyl-2-methyl-Δ2-tetrahydropyrimidin, 1-(1-Methylcyclohexyl)-2-methyl-Δ2-tetrahydropyrimidin, 1-(2-Methylhexyl)-2-methyl-Δ2-tetrahydropyrimidin, 1-(3,3,5-Trimethylcyclohexyl)-2-methyl-Δ2-tetrahydropyrimidin.

Derartige Verbindungen lassen sich insbesondere entsprechend den Angaben in der DE-A-2 439 550 synthetisieren.

Ganz besonders bevorzugte Amidine sind solche vom Typ

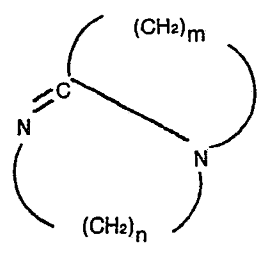

wobei
m 2, 3, 4, 5 oder 11 und
n 2, 3 oder 4 bedeutet.

Die Herstellung einer Anzahl solcher Verbindungen ist beispielsweise in der DE-B-1 545 855 beschrieben.

Verbindungen wie 4-(2-Tetrahydroazepinyl)-morpholin,
1-(3-N,N-Dimethylamino-propyl)-2-methyl-Δ2-tetrahydropyrimidin,
1-(2-N,N-Dimethylamino-ethyl)-2-methyl-Δ2-tetrahydropyrimidin,
werden entsprechend den Angaben der DE-A-3 049 131 und 2 722 514 hergestellt.

Bei den Guanidinen handelt es sich bevorzugt um offenkettige oder cyclische Guanidine, aber auch Di- bzw. Tri-Guanidine, sowie Verbindungen, welche den Guanidinrest mehrfach tragen können. Beispiele sind in der folgenden Tabelle wiedergegeben.

| Substituenten am Stickstoff | x-fach substituiert, | in folgenden Guanidin-Grundgerüsten |
|---|---|---|
| Methyl-, Ethyl-, (Iso)propyl-, (Iso)butyl-, (tert.)-Butyl-, (Iso)pentyl-, Hexyl-, 2-Ethylhexyl-, Octyl-, Dodecyl-, Stearyl-, Ethoxypropyl-, Butoxyhexyl-, Cyanoethyl-, Cyclohexyl-, Butoxycarbonylmethyl-, Methoxycarbonylmethyl-, Dimethylaminopropyl-, Cyclopentyl-, Cyclohexyl-, (Chlor)Benzyl-, Phenethyl-, Phenyl-, Tolyl-, Methoxyphenyl-, Ethoxycarbonylphenyl-, | tetra- ———— | 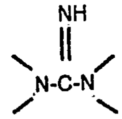 |
| | penta- ———— | 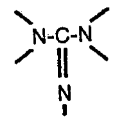 |
| | tri- ———— | 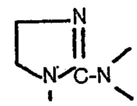 |
| | tri- ———— | 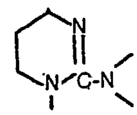 |
| | tri- ———— | 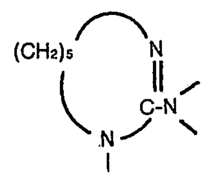 |
| | mono- ———— | 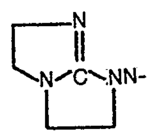 |
| | mono- ———— | 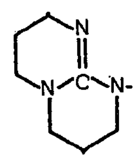 |
| | mono- ———— | 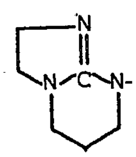 |

Weitere Beispiele sind Iminokohlensäure-bis-(sek.)-amide folgender Zusammensetzung:

| | | |
|---|---|---|
| Methylimino-<br>Ethylimino-<br>Cyanethylimino-<br>Dibutylaminobutyl-imino-<br>Hexylimino-<br>Stearylimino-<br><br>Cyclohexylimino-<br>Benzylimino-<br>Phenylimino-<br>p-Chlorbenzylimino-<br>4-Methyl-benzyl-imino- | Kohlensäure | -bis-morpholid<br>-bis-piperidid<br>-bis-N'-methyl-piperazid |

Besonders geeignete cyclische Guanidinverbindungen werden in den folgenden Formeln wiedergegeben:

Besonders bevorzugt sind unter den Guanidinverbindungen das Tetramethylguanidin, Pentamethylguanidin sowie folgende cyclische Guanidinverbindungen:

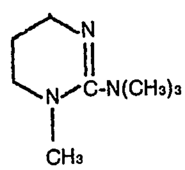 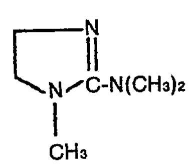

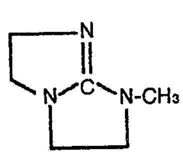 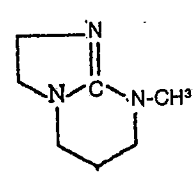

Es können auch Säureadditionssalze der Amidine bzw. Guanidine eingesetzt werden, jedoch sind diese Salze zumeist weniger bevorzugt.

Die Amidin- und Guanidinverbindungen können auch in Mischung mit aminofunktionellen Verbindungen, einschließlich der genannten Hydrazin-, Alkylhydrazin- oder Hydrazidverbindungen als Komponente (c) verwendet werden.

Die Verbindungen (c) werden in einer Menge von 0,1 bis 24 Äquivalentprozent pro NCO-Gruppe im Polyisocyanat (a), vorzugsweise 0,1 bis 8 Äquivalentprozent, besonders bevorzugt 0,3 bis 3 Äquivalentprozent eingesetzt. Die Polyadduktumhüllung kann zwar auch mit höheren Anteilen, z. B. 30 Äquivalentprozent Komponente (c) pro NCO, durchgeführt werden, jedoch wird durch solch hohe Umsetzungsgrade die Zahl der reaktiven Isocyanatgruppen für die spätere Verwendung der erfindungsgemäßen Suspensionen zu stark vermindert. Als Aminäquivalent gilt bei Hydrazin jeweils eine $NH_2$-Gruppe (bzw. eine –NH-Alkylgruppe bei Alkylhydrazinderivaten), bei Hydrazidverbindungen gilt eine $-CO-NH-NH_2$-Gruppe als ein Aminäquivalent.

Die Umhüllungsreaktion findet bei Temperaturen unter der jeweiligen Schmelztemperatur des Polyisocyanats (a) statt, d. h. im allgemeinen unter 70 °C, bevorzugt zwischen 0 und 50 °C.

Die Reaktion zwischen den Komponenten (a) und (c) erfolgt in der Regel innerhalb weniger Minuten, so daß auch eine kontinuierliche Arbeitsweise möglich ist.

Die Umhüllung der festen Polyisocyanate (a) durch Reaktion mit Verbindungen (c) findet in einem flüssigen Medium (b) statt, das kein (gutes) Lösungsmittel für die festen Polyisocyanate (a) ist.

Als flüssiges Medium (b) kommen höhermolekulare Polyole und/oder insbesondere aromatische höhermolekulare Polyamine mit Molekulargewichten von 400 bis 6000, vorzugsweise 400 bis 3000, besonders bevorzugt 1000 bis 3000, in Frage, gegebenenfalls unter Zusatz von Polyolen und/oder aromatischen Polyaminen des Molekulargewichtsbereichs 60 bis 399.

Geeignete niedermolekulare Polyole sind beispielsweise Butandiol-1,4, Decandiol-1,10, Neopentylglykol, Tetra(hydroxypropyl)-ethylendiamin oder Ricinusöl.

Im flüssigen Suspendiermedium (b) können auch weichmacherartige Verbindungen mitverwendet werden, z. B. Phthalate wie Dioctyl-, Diisododecyl-, Dibenzyl-, Butylbenzylphthalat; Phosphate mit bis zu 8 C-Atomen im Alkylrest wie Trioctylphosphat; Kohlenwasserstoffe wie sogenannte Butadienöle, oder Polyether mit höherem Molekulargewicht.

Dem Suspendiermedium (b) können gegebenenfalls zur Viskositätserniedrigung Lösungsmittel unpolarer oder wenig polarer Art zugemischt werden, z. B. aliphatische, cycloaliphatische oder aromatische Kohlenwasserstoffe, Halogenkohlenwasserstoffe, Ether, Ketone oder Ester, vorzugsweise mit Siedepunkten unter 146 °C. Die Lösungsmittel werden zweckmäßig nach der Umhüllungsreaktion wieder entfernt, z. B. durch Abziehen im Vakuum.

Als Verbindungen (d) werden stark acylierend wirkende Verbindungen wie Isocyanate, Säureanhydride oder Pyrokohlensäureester bevorzugt verwendet. Während im Prinzip andere acylierend wirkende Verbindungen wie Säurehalogenide oder Carbaminsäurehalogenide gleichfalls geeignet wären, sind sie weniger bevorzugt, da der freiwerdende Halogenwasserstoff störend wirkt.

Insbesondere sind als Verbindungen (d) Isocyanate geeignet, z. B. Monoisocyanate wie n-Hexylisocyanat, Stearylisocyanat, Toluolsulfonylisocyanat; bevorzugt sind jedoch Di- und/oder Polyisocyanate, wie Biuretpolyisocyanate, trimerisierte Isocyanate, carbodiimidisierte Diisocyanate und ähnlich höherfunktionelle Abwandlungsprodukte von di- und höherfunktionellen Isocyanaten sowie auch NCO-Prepolymere.

Beispiele sind Hexamethylendiisocyanat, Dodecamethylendiisocyanat, Isophorondiisocyanat, α,α,α',α'-Tetramethyl-1,4-hexahydro-p-xylylen-diisocyanat, 4,4'- und/oder 2,4'-Diisocyanato-dicyclohexylmethan-diisocyanat sowie die aus den Diisocyanaten hergestellten Biuret-Polyisocyanate, trimerisierten und/oder carbodiimidisierten Polyisocyanate, sowie von den Di- und/oder Polyisocyanaten abgeleiteten NCO-Prepolymere auf Basis von di- oder höherfunktionellen Verbindungen mit gegenüber NCO reaktiven Gruppen, wie z. B. Polyolen, und überschüssigen molaren Mengen an Di- und/oder Polyisocyanaten.

Di-/Polyisocyanate, die an aliphatische Reste gebundene NCO-Gruppen aufweisen, sind dabei besonders bevorzugt. Einsetzbar sind jedoch auch aromatische Mono- und besonders Di- und/oder Polyisocyanate, z. B. Phenylisocyanat, die Toluylendiisocyanate, die Diphenylmethandiisocyanate, das 3,3'-Dimethyl-4,4'-diisocyanatodiphenyl, insbesondere aber ihre Trimerisate oder anderen polyfunktionellen Derivate, sowie NCO-Prepolymere auf ihrer Basis.

Als acylierende Verbindungen kommen auch Säureanhydride wie Acetanhydrid oder Phthalsäureanhydrid oder Pyrokohlensäureester in Betracht.

Die acylierend wirkenden Verbindungen (d) werden in solchen Mengen eingesetzt, daß sie der Menge der in der Suspension verbliebenen, nicht an der Kornoberfläche der feinteiligen Isocyanate (a) umgesetzten Komponente (c) höchstens etwa äquivalent sind.

Es hat sich gezeigt, daß nach der Umhüllungsreaktion gemäß der EP-A-103 323 auch bei Verwendung von nur 0,1 bis maximal 25 Äquivalent-% aminofunktioneller Verbindung pro NCO ein beachtlicher Anteil dieser Amine in der Suspension nicht mit den festen, feinteiligen Polyisocyanaten umgesetzt wird. Dieser Anteil kann etwa 10 bis 85% der eingesetzten Menge an Amin betragen.

Im erfindungsgemäßen Verfahren werden diese restlichen Verbindungen (c) mit acylierend wirkenden Substanzen (d) zu Harnstoffen, Semicarbaziden oder Amiden umgesetzt.

Erfindungsgemäß können die nicht umgesetzten Verbindungen (c) auch durch Neutralisierung mit z. B. anorganischen oder organischen Säuren entfernt werden.

Als Verbindungen (d) kommen darüber hinaus auch alkylierend wirkende Substanzen, z. B. Dialkylsulfate oder p-Toluolsulfonsäurealkylester, Sultone wie Propio- oder Butyrosulton (wenn auch weniger bevorzugt), in Frage.

Die erfindungsgemäßen Suspensionen, in welchen die restlichen Verbindungen (c) weitgehend oder vollständig umgesetzt worden sind, zeigen als Reaktivsysteme nicht mehr die oben für die Herstellung von großvolumigen Formkörpern beschriebenen Nachteile. So bleibt die Aufdickungstemperatur des Systems auch bei langsamem Aufheizen von der Randverfestigung bis zur Verfestigung des flüssigen Kerns praktisch konstant, so daß auch keine Inhomogenitäten mehr beobachtet werden.

In vielen Fällen ist die Aufdickungstemperatur der erfindungsgemäßen Suspensionen etwas niedriger als jene gemäß EP-A 103 323.

Im erfindungsgemäßen Verfahren werden die acylierend bzw. neutralisierend wirkenden Verbindungen (d) in solchen Mengen eingesetzt, daß die in der Suspension verbliebenen Verbindungen (c) mindestens teilweise, vorzugsweise jedoch vollständig acyliert bzw. neutralisiert werden (z.B. mit Isocyanaten in die Harnstoffe überführt werden).

Die erfindungsgemäßen Suspensionen sind bei Raumtemperatur mindestens einige Monate lang lagerfähig. Bei sehr langsamem Aufheizen tritt von außen nach innen eine Verfestigung der Masse ein, wobei die Aufdickungstemperatur der Suspension während des langsamen Aufheizens im noch flüssigen Formteilinneren offenbar noch etwas weiter abfällt, so daß das Fortschreiten der Verfestigungsfront in Richtung zum Formteilinneren während des Aufheizens immer schneller erfolgt und nicht, wie bei den Suspensionen nach dem Stand der Technik immer langsamer bzw. die Aufdickungstemperatur immer höher wird. Ein zusätzlicher Vorteil des erfindungsgemäßen Verfahrens liegt darin, daß auch mit hohen Mengen an Verbindungen (c) versetzte Suspensionen, bei üblichen Ausheiztemperaturen bzw. Aufdickungstemperaturen zur Reaktion zu bringen sind. Hohe Mengen an Verbindungen (c) können dann notwendig sein, wenn eine Gießmasse während ihrer Herstellung sehr starken mechanischen Beanspruchungen, gegebenenfalls sogar unter Temperaturerhöhung, in z.B. einem Misch- oder Zerkleinerungsaggregat unterworfen werden soll und zu diesem Zweck auf der Isocyanatoberfläche eine möglichst starke Polyharnstoffschicht vorhanden sein muß.

Wie bereits erwähnt, ist ein weiterer Gegenstand der Erfindung die Verwendung der erfindungsgemäßen Suspensionen zur Herstellung von Polyurethanen, vorzugsweise in Form lagerstabiler Einkomponenten-Reaktivsysteme, enthaltend

A. Polyisocyanate,

B. höhermolekulare Polyhydroxyl- und/oder Polyaminoverbindungen,

C. gegebenenfalls niedermolekulare Kettenverlängerungsmittel,

D. gegebenenfalls Polyurethankatalysatoren und

E. gegebenenfalls übliche Hilfs- und Zusatzstoffe.

Bevorzugt werden die erfindungsgemäßen Suspensionen so eingesetzt, daß die Polyisocyanate (a) als alleinige Polyisocyanatkomponente zum Aufbau von Polyurethan(harnstoff)en dienen. Es ist jedoch auch möglich, zusätzlich weitere nichtumhüllte Polyisocyanate, z.B. Toluylendiisocyanate, Diphenylmethandiisocyanate, Naphthylen-1,5-diisocyanat oder dimeres Toluylendiisocyanat oder 3,3'-Diisocyanato-4,4'-dimethyl-N,N'-diphenylharnstoff in einer Menge von höchstens 50 Äquivalent-% aller Isocyanatgruppen mitzuverwenden.

Als solche weiteren Polyisocyanate sind im Prinzip alle Polyisocyanate geeignet, wie sie in der DE-A 29 20 501 (Seiten 12 bis 16) aufgeführt sind.

Analog können neben den in den erfindungsgemäßen Suspensionen bereits enthaltenen Komponenten (b) auch weitere höhermolekulare Polyole, höhermolekulare aromatische Polyamine und Kettenverlängerungsmittel mitverwendet werden.

Beispiele für solche Ausführungsformen sind in der EP-A 103 323 beschrieben und können sinngemäß auf die erfindungsgemäßen Suspensionen übertragen werden.

Als höhermolekulare Polyhydroxylverbindungen B), die auch als Suspendiermedium (b) für die Polyisocyanate (a) dienen können, sind zwei- oder höherwertige Polyhydroxylverbindungen mit 2 bis 8, vorzugsweise 2 bis 4, Hydroxylgruppen und einem Molekulargewicht von 400 bis 6000 geeignet. Dies sind mindestens zwei Hydroxylgruppen aufweisende Polyester, Polyether, Polythioether, Polyacetale, Polycarbonate, Polylactone oder Polyesteramide, sowie auch Polybutadienverbindungen oder ihre Mischungen, wie sie für die Herstellung von homogenen, gegebenenfalls zellförmigen oder schaumstoffartigen Polyurethanen an sich bekannt sind. Bevorzugt sind Polyether und Polyester.

Die in Frage kommenden Polyether sind solche der an sich bekannten Art und werden z.B. durch Polymerisation von Tetrahydrofuran oder von Epoxiden wie Ethylenoxid, Propylenoxid, Butylenoxid, Styroloxid oder Epichlorhydrin bzw. durch Anlagerung dieser Epoxidverbindungen, vorzugsweise von Ethylenoxid oder -propylenoxid, gegebenenfalls im Gemisch oder nacheinander, an Startkomponenten mit reaktionsfähigen Wasserstoffatomen wie Wasser, mehrwertige Alkohole, Ammoniak oder mehrwertige Amine oder Zucker hergestellt.

Die in Frage kommenden, Hydroxylgruppen aufweisenden Polyester sind z.B. Umsetzungsprodukte von mehrwertigen, vorzugsweise zweiwertigen, und gegebenenfalls zusätzlich drei- und mehrwertigen Alkoholen mit mehrwertigen, vorzugsweise zweiwertigen, Polycarbonsäuren oder deren Anhydriden oder entsprechenden Polycarbonsäureestern von niedrigen Alkoholen.

Die Polycarbonsäuren können aliphatischer, cycloaliphatischer, aromatischer, araliphatischer und/oder heterocyclischer Natur und gegebenenfalls, z.B. durch Halogenatome, substituiert, sie können aber auch ungesättigt sein.

Auch Polyester aus Lactonen, z.B. ε-Caprolacton, oder aus Hydroxycarbonsäuren, z.B. ω-Hydroxycapronsäure, sind einsetzbar, insbesondere wenn sie zusätzliche Komponenten, wie Diethylenglykol oder 1,4-Butandiol, enthalten. Als Polyacetale sind z.B. die aus Glykolen und Formaldehyd herstellbaren Verbindungen geeignet. Als Hydroxylgruppen

aufweisende Polycarbonate kommen solche der an sich bekannten Art in Betracht, z. B. die durch Umsetzung von Propandiol-1,3, Butandiol-1,4 und/oder Hexandiol-1,6, Di-, Tri- oder Tetraethylenglykol oder Thiodiglykol, mit Diarylcarbonaten, z. B. Diphenylcarbonat, oder Phosgen, hergestellt werden können. Es können gegebenenfals auch Polyhydroxylverbindungen eingesetzt werden, in welchen hochmolekulare Polyaddukte bzw. Polykondensate oder Polymerisate in feindisperser oder auch gelöster Form enthalten sind. Auch durch Vinylpolymerisate modifizierte Polyhydroxylverbindungen, wie sie z. B. durch Polymerisation von Styrol und Acrylnitril in Gegenwart von Polyethern oder Polycarbonatpolyolen erhalten werden, sind für das erfindungsgemäße Verfahren geeignet.

Weitere Vertreter der genannten zu verwendenden Verbindungen sind z. B. in High Polymers, Vol. XVI, «Polyurethans, Chemistry and Technology», verfaßt von Saunders-Frisch, Interscience Publishers, New York, London, Band I, 1972, Seiten 32 bis 42 und Seiten 44 bis 54 und Band II, 1964, Seiten 5 bis 6 und 198 bis 199, sowie im Kunststoff-Handbuch, Band VII, Vieweg-Höchtlen, Carl-Hanser-Verlag, München, 1966, z. B. auf den Seiten 45 bis 71, sowie in der DE-A-2 854 384 ausführlich beschrieben.

Es ist selbstverständlich möglich, Mischungen der obengenannten Polyhydroxylverbindungen einzusetzen.

Als flüssiges Medium (b) bzw. als Reaktivkomponente B kommen auch flüssige oder niedrigschmelzende ($< 50\,°C$), höhermolekulare aromatische Polyamine, gegebenenfalls zusammen mit niedermolekularen aromatischen Polyaminen (Molekulargewicht bis 399) in Frage.

Als höhermolekulare Polyaminoverbindungen mit aromatischen Aminogruppen mit einem Molekulargewichtsbereich von 400 bis 6000 werden insbesondere solche Polyaminoverbindungen eingesetzt, wie sie durch Hydrolyse von entsprechenden NCO-Prepolymeren auf der Basis von höhermolekularen Polyhydroxylverbindungen und überschüssigen aromatischen Diisocyanaten durch (vorzugsweise basische) Hydrolyse hergestellt werden können. Beispiele für dieses Verfahren werden in DE-A-2 948 419, DE-A-3 039 600, DE-A-3 112 118, EP-A-61 627, EP-A-71 132 und EP-A-71 139 angegeben. In der erstgenannten Druckschrift werden auch weitere Verfahren des Standes der Technik zur Herstellung von aromatischen Aminoverbindungen höhermolekularer Struktur genannt, wie sie für das erfindungsgemäße Verfahren geeignet sind. Es handelt sich bei dem Verfahren nach DE-A-2 948 419 und den anderen zitierten Druckschriften vorzugsweise um Polyether-Polyamine, aber auch Polyester-, Polyacetal-, Polythioether- oder Polycaprolacton-Polyamine, vorzugsweise 2- oder 3funktionelle Polyamine, welche Urethangruppen (aus der Reaktion der entsprechenden höhermolekularen Polyhydroxylverbindungen mit den überschüssigen Polyisocyanaten) enthalten und die Aminogruppen an den Rest des (ehemaligen) Polyisocyanats tragen. Die aromatischen, höhermolekularen Polyamine können jedoch auch nach anderen bekannten Verfahren hergestellt werden (siehe z. B. EP-A-71 132).

Die erfindungsgemäßen Einkomponenten-Reaktivsysteme enthalten vorzugsweise niedermolekulare Kettenverlängerer (Bestandteil C) der Einkomponentensysteme). Hierbei handelt es sich um zwei- oder mehrfunktionelle Verbindungen, welche an aliphatische und/oder cycloaliphatische Gruppen gebundene Hydroxylgruppen (Polyole) und/oder an aromatische, einschließlich heterocyclische Ringe mit aromatischem Charakter gebundene $NH_2$-Gruppen (Polyamine) und Molekulargewichte zwischen 62 und 399 aufweisen. Bevorzugt sind dabei niedermolekulare Diole mit an aliphatische oder cycloaliphatische Gruppen gebundene Hydroxylgruppen, sowie aromatische Diamine des genannten Molekulargewichtsbereichs. Es können selbstverständlich auch Mischungen dieser Verbindungen verwendet werden. Als Beispiele für derartige Verbindungen seien genannt: Ethylenglykol, Trimethylenglykol, Butandiol-2,3 und/oder -1,4, Hexandiol-1,6, Neopentylglykol, 1,4-Bis-hydroxyethyl-cyclohexan, 1,4-Dihydroxycyclohexan, Terephthalsäure-bis-(β-hydroxyethyl)-ester, 1,4,3,6-Dianhydrohexite, 1,4-Monoanhydrotetrite, sowie weniger bevorzugt Diole mit sekundären Hydroxylgruppen, z. B. Propylenglykol, Butandiol-2,3, oder Pentandiol-2,5. Als mehrwertige Verbindungen seien genannt: Trimethylolpropan, Trimethylolethan, Hexantriol-1,2,6, Glycerin, Pentaerythrit, Chinit, Sorbit, Rizinusöl sowie Di-, Tri- und Tetraethylen-, -propylen- und -butylen-glykole, ferner Bis-(2-hydroxyethyl)-hydrochinon, Bis-(2-hydroxyethyl)-resorcin, Formose oder Formit. Ferner sind geeignet tertiäraminhaltige Di- oder Polyole, z. B. N-Methyldiethanolamin, Triethanolamin oder N,N′-Bis-hydroxyethyl-piperazin.

Bevorzugt werden jedoch anstelle von niedermolekularen Polyolen niedermolekulare aromatische Diamine eingesetzt. Unter aromatischen Polyaminen sollen auch solche Amine verstanden werden, welche die Aminogruppe an heterocyclische Reste mit aromatischem Charakter gebunden enthalten. Als aromatische Polyamine sind z. B. geeignet: p-Phenylendiamin, 2,4-/2,6-Toluylendiamin, Diphenylmethan-4,4′- und/oder -2,3′- und/oder -2,2′-diamine, 3,3′-Dichlor-4,4′-diaminodiphenylmethan, 3-($C_1$–$C_8$)-Alkyl-4,4′-diaminodiphenylmethane, die 3,3′-($C_1$–$C_4$)-4,4′-diaminodiphenylmethane sowie die 3,3′,5,5′-Tetra-($C_1$–$C_4$)-alkyl-4,4′-diphenylmethane, die 4,4′-Diaminodiphenyl-sulfide, -sulfoxide oder -sulfone, 2,4-Diaminobenzoesäureester nach DE-A-2 025 900, sowie durch eine oder zwei ($C_1$–$C_4$)-Alkylgruppen substituierte Toluylendiamine. Besonders bevorzugt sind 3,5-Diethyl-2,4- und/oder -2,6-diaminotoluol (besonders ihre technischen (80/20)- oder (65/35)-Isomerengemische), unsymmetrisch tetraalkylsubstituierte Diaminodiphenylmethane, z. B. 3,6-Diethyl-3′,5′-diisopropyl-4,4′-diaminodiphenylmethan und ihre Isomerengemische entsprechend DE-A-2 902 090, 4,4′-Diaminobenzanilid sowie 3,5--Diaminobenzoesäure-($C_1$–$C_4$)-alkylester, 4,4′- und/oder 2,4′-Diamino-diphenylmethan sowie Naphthylen-1,5-diamin.

Auch Diole oder Diamine mit zusätzlichen funktionellen Gruppen sind einsetzbar, z. B. Adipinsäure-

bis-(2-hydroxyethyl)-ester, Terephthalsäure-bis-(2-hydroxyethyl)-ester, Diol-urethane, Diol-harnstoffe oder Polyole, welche Sulfonat- und/oder Phosphonatgruppen enthalten, z.B. 1,6-Hexamethylen-bis-(2-hydroxyethylurethan), 4,4'-Diphenylmethan-bis-(2-hydroxyethylharnstoff) oder das Addukt von Na-Bisulfit an Butendiol-1,4 bzw. dessen Alkoxylierungsprodukte. Weitere niedermolekulare Verbindungen C werden ausführlich in der DE-A-2 854 384 beschrieben.

Gegebenenfalls können auch gegenüber Isocyanaten monofunktionelle Verbindungen in Anteilen von 0,01 bis 10 Gew.-% in Komponente C als Kettenabbrecher mitverwendet werden.

Als Katalysatoren D für die erfindungsgemäßen langzeitlagerstabilen Einkomponentensysteme können die üblichen Polyurethankatalysatoren, mit besonders gutem Effekt aber organische Blei- und/oder Zinnverbindungen verwendet werden, gegebenenfalls unter Mitverwendung weiterer, üblicher Polyurethankatalysatoren, insbesondere von tert.-Amin-haltigen Katalysatoren. Sie werden in der EP-A-103 323 ausführlich beschrieben.

Die Bleikatalysatoren werden bevorzugt in Systemen mit Polyetherpolyolen mit sekundären Hydroxylgruppen, z.B. Polypropylenoxidglykolen, verwendet.

Bei Einsatz von Uretdiondiisocyanaten kann insbesondere bei Bleikatalysatoren auch eine zusätzliche Vernetzung infolge Spaltung des Uretdionringes erfolgen, wobei Allophanatgruppen oder bei vollständiger Spaltung des Uretdionrings zusätzliche Urethangruppen gebildet werden.

Bei Einsatz von (Polyester)polyolen mit im wesentlichen primären Hydroxylgruppen sind dagegen die Zinnverbindungen, besonders die Zinn/Schwefel-Katalysatoren, von besonderer Wirksamkeit. Bei aromatischen $NH_2$-Gruppen-haltigen Polyethern kann zumeist auf eine Katalyse völlig verzichtet werden. Die Katalysatoren D werden in der Regel in einer Menge von 0,001 bis 5 Gew.-%, vorzugsweise von 0,01 bis 2 Gew.-%, bezogen auf A und B, eingesetzt.

Als gegebenenfalls einzusetzende Hilfs- und Zusatzstoffe E seien genannt: Farbstoffe oder Pigmente, Füllstoffe wie Silicagel, Gips, Talkum, Aktivkohle, Metallpulver, UV-Absorptionsmittel oder Stabilisatoren wie phenolische Antioxidantien, Lichtschutzmittel, Treibmittel, oberflächenaktive Zusatzstoffe wie Emulgatoren oder Schaumstabilisatoren, gegebenenfalls Zellregler, Antiblockmittel, Silicone, Flammschutzmittel oder fungistatisch und/oder bakteriostatisch wirkende Substanzen.

Als Füllstoffe sind z.B. Fasermaterialien, d.h. alle an sich bekannten anorganischen/oder organischen, faserförmigen Verstärkungsmaterialien einsetzbar, z.B. Glasfasern, vorzugsweise in Längen zwischen 20 und 60 mm, Graphitfasern und Asbestfasern oder Fasermaterialien, die von einem organischen Polymeren stammen, z.B. von einem Polyester wie Polyethylenterephthalat, oder vorzugsweise aromatischen Polyamiden, wie dem m-Phenylen/Isophthalsäurepolyamid, oder dem Polyp-phenylen-terephthalamid, oder auch Polycaprolactam. Diese Fasermaterialien können auch als Matte, Band, durchgehende Fasern, Vlies, Stoff oder als Stapelfaserwirrgemisch vorliegen. Bevorzugt sind Glasfasern, die mit Schlichten ausgerüstet sind, um den Fasern eine Affinität zu Polyurethanen zu verleihen. Die einzubauende Füllstoffmenge hängt von der gewünschten Verbesserung der mechanischen Eigenschaften ab, im allgemeinen werden 5 bis 60 Gew.-% Fasermaterial angewendet.

In den erfindungsgemäßen Einkomponenten-Reaktivsystemen liegt das $NCO/(NH_2+OH)$-Äquivalentverhältnis zwischen 0,5:1 und 1,5:1, bevorzugt 0,8:1 bis 1,5:1, besonders bevorzugt 0,95:1 bis 1,2:1.

Pro $(OH+NH_2)$-Äquivalent an höhermolekularen Polyolen und/oder Polyaminen B werden in den erfindungsgemäßen Einkomponenten-Reaktivsystemen meist 0,3 bis 10, bevorzugt 0,5 bis 8 und besonders bevorzugt 0,75 bis 5 $(OH+NH_2)$-Äquivalente der Kettenverlängerungsmittel C eingesetzt.

Uretdionringe enthaltende (dimere) Diisocyanate können im allgemeinen als Diisocyanate betrachtet werden, so daß nur die freien NCO-Gruppen berücksichtigt werden. Unter bestimmten Versuchsbedingungen (Verwendung von Bleikatalysatoren, höhere Verarbeitungstemperatur, z.B. $>140\,^\circ C$) greift der Uretdionring jedoch mit in die Reaktion ein (zusätzliche Verknüpfungsstellen über Allophanat- oder Biuretgruppen), so daß die latenten NCO-Gruppen des Uretdionrings bei der Berechnung der genannten Äquivalentverhältnisse mitberücksichtigt werden müssen.

Je nach Viskosität bzw. Schmelzverhalten der Ausgangskomponenten erhält man bei Raumtemperatur gut gießbare, rakelfähige oder auch feste, leicht schmelzbare Einkomponenten-PU-Reaktivmischungen. Diese Reaktivmischungen stellen dabei eine heterogene Suspension der festen, umhüllten Isocyanate in den Polyol- und/oder Polyaminkomponenten dar. Die Hitzevernetzung dieser Mischung erfolgt zumeist erst nach Zugabe geeigneter Katalysatoren D. Ohne diese Katalysatoren werden insbesondere bei Verwendung von Polyolen als höhermolekulare Verbindungen B oder Kettenverlängerungsmittel C nicht befriedigende Eigenschaften der Polyurethanformkörper erhalten. Bei alleiniger Verwendung der gegenüber NCO-Gruppen deutlich reaktiveren aromatischen Polyaminverbindungen kann jedoch auf einen Zusatz von Katalysatoren verzichtet werden.

Ein weiteres Merkmal der erfindungsgemäßen Einkomponenten-PU-Reaktivsysteme ist, daß sie nach Erreichen einer (von Menge und Art der Verbindungen (c) abhängigen) Temperatur innerhalb weniger Minuten vernetzen. Das bedeutet, daß einerseits unterhalb dieser Temperatur («Aufdickungstemperatur») ein unerwünschter langer Fließweg der noch unvernetzten Reaktivmischung ein völliges Ausfüllen der heißen Werkzeugform erlaubt, andererseits aber die folgende rasche Verfestigung der Gießansätze nach Temperaturerhöhung schnelle Entformungszyklen gestattet. Ein Vorteil ist auch die selbst bei höheren Temperaturen (z.B. bis 60 °C) sehr lange Lagerfähigkeit der erfindungsgemäßen Reaktivsysteme.

Bei Verwendung der erfindungsgemäßen Polyisocyanatsuspensionen sind die Anwendungsmöglichkeiten von Einkomponentensystemen deutlich verbreitert: Es können auch flüssige höhermolekulare Polyamine und Polyole und beliebige Kettenverlängerungsmittel eingesetzt werden. Insbesondere ist es möglich, in erfindungsgemäße lagerstabile Einkomponentensysteme auch aromatische Diamine, wie z.B. 4,4'-Diaminodiphenylmethan, 2,4- oder 2,6-Diaminotoluol, 3,5-Diethyl-2,4/2,6-(65/35)-diaminotoluol, 1,5-Diamino-naphthalin oder 3,5-Diethyl-3',5'-diisopropyl-4,4'-diamino-diphenylmethan als Kettenverlängerungsmittel D einzusetzen. Werden dagegen diese Diamine mit üblichen NCO-Prepolymeren umgesetzt, so resultieren extrem kurze Gießzeiten, so daß ein einwandfreier Verlauf solcher Ansätze im Werkzeugteil nicht möglich ist.

Durch die Verwendung von höhermolekularen Polyaminen in dem erfindungsgemäßen Einkomponentensystem lassen sich Polyurethan(harnstoff)e mit deutlich günstigeren Eigenschaften (z.B. höheren Festigkeiten, höheren Spannungswerten, höherer Härte und höheren Erweichungsbereichen) erzielen als mit höhermolekularen Polyolen alleine.

Die erfindungsgemäßen Einkomponentensysteme können durch Hitzestoß verfestigt werden. Bei Raumtemperatur oder weniger erhöhter Temperatur tritt hingegen auch in Gegenwart stark wirksamer Katalysatoren überraschenderweise keine Verfestigung ein, so daß auch katalysatorhaltige Mischungen langzeitlagerstabile Einkomponentensysteme sind.

Die Verarbeitung der erfindungsgemäßen Einkomponentensysteme richtet sich nach deren Beschaffenheit. Flüssige, bei Raumtemperatur gießbare Systeme lassen sich in Gießverfahren verarbeiten, gegebenenfalls werden sie vor der Verarbeitung kurz erwärmt, z.B. auf 50 bis 70 °C. Die Verarbeitung kann auch im Schleuderguß erfolgen; Hohlkörper können durch Einbringung der Reaktivmasse in beheizte Formen unter Verteilung an der Oberfläche durch entsprechende Rotationsbewegungen hergestellt werden.

Beim sogenannten Slush-molding-Prozess werden beheizte Formen mit dem erfindungsgemäßen Reaktivsystem gefüllt; nach einer gewissen Ausheizzeit (Reaktion an der beheizten Formoberfläche) wird überschüssige, noch nicht reagierte Reaktionsmasse aus den Formen wieder ausgegossen.

Bei Mitverwendung von Treibmitteln können zellige Polyurethane hergestellt werden, die gegebenenfalls eine integrale Dichteverteilung aufweisen.

Nicht mehr gießbare, aber noch verlaufende Reaktivsysteme können z.B. mit einer Rakel auf gewünschte Unterlagen, z.B. textile Unterlagen, z.B. Vliese, Gewirke und Gewebe, (Spalt)leder, Matrizen (z.B. Velourleder-Silicon-Matrizen), oder Zwischenträger (z.B. Trennpapiere) unter Bildung von Beschichtungen oder Zurichtungen, aufgebracht und anschließend durch Hitzestoß verfestigt werden.

Plastische Reaktivsysteme (Pasten) können unter Druck- und Formgebung in der Hitze verpreßt werden, wobei bei 120 °C bereits 5 bis 15 Minuten zur Verfestigung ausreichen.

Auch durch Tauchverfahren können Oberflächenbeschichtungen, Abdruckformen oder Formkörper hergestellt werden, indem man die beheizten, zu beschichtenden Formen in das Reaktivsystem eintaucht.

Das Reaktivsystem kann auch durch Schlitze oder Düsen in heiße Medien (Heißluft oder heiße Flüssigkeiten) ausgepreßt und dadurch verfestigt werden.

Das Reaktivsystem kann in beheizten Extrudern teilweise oder weitgehend zum Polyurethan umgesetzt, dann durch Schlitze oder Düsen extrudiert und gegebenenfalls in heißen Medien vollständig ausreagiert oder in heiße Formen eingebracht werden, aus denen das ausgehärtete Polyurethan nach kurzer Zeit entformt werden kann. Auch nach den Reaktionsspritzgußverfahren (reaction injection molding – RIM) kann das Reaktivsystem verarbeitet werden.

Feste Reaktivsysteme, insbesondere auf Basis höherschmelzender Polyole (45 bis 65 °C), werden unter Druck und Formgebung (Spritzguß) bei oder oberhalb der Schmelztemperatur des Polyols verarbeitet. Man kann so verfahren, daß man die vorher hergestellten Einkomponentensysteme in Form fester Granulate in eine über den Schmelzpunkt des Polyols aufgewärmte Form (im allgemeinen unterhalb 70 °C) einbringt. Nach dem Aufschmelzen der Granulate wird die Form auf 100 bis 120 °C erwärmt und der Inhalt verfestigt.

Die Verfestigungstemperatur der erfindungsgemäßen Einkomponenten-Reaktivsysteme ist von Menge und chemischer Konstitution der Verbindungen (c), die zur Umhüllung der Polyisocyanate (a) verwendet wurden, stark abhängig. Mit zunehmender Verfestigungstemperatur nimmt die aufzuwendende Verfestigungszeit zur Bildung der Polyurethane ab. Die Ausheizdauer kann je nach Temperatur von weniger als 1 Minute bis zu mehreren Stunden betragen. Manchmal ist es vorteilhaft, die Kunststoffe nach Entformen noch einige Zeit bei 100 °C zu tempern, um eine vollständige Durchhärtung zu gewährleisten.

Eine Aushärtung der Einkomponenten-Reaktivsysteme kann jedoch auch durch Zugabe von vorzugsweise hochpolaren Lösungsmitteln, wie Dimethylformamid, N-Methyl-pyrrolidon, oder mäßig polaren Lösungsmitteln, wie Propylencarbonat, Dioxan oder Glykolmonomethyletheracetat, bewirkt werden. Die Gießzeit (Topfzeit) kann dabei durch die Menge des zugesetzten Lösungsmittels gesteuert werden. Bei geringen Mengen an Lösungsmittel erhält man Systeme mit mehrtägiger Topfzeit bei Raumtemperatur; bei höheren Dosierungen tritt bereits nach 10 bis 15 Minuten eine schnelle oder gar schlagartige Verfestigung ein. Die erforderliche Menge an Lösungsmittel ist von der Menge und Art der Verbindung (c) abhängig und kann nach wenigen Vorversuchen für das jeweilige Reaktivsystem festgelegt werden. Der Vorteil dieser Arbeitsweise liegt darin, daß die Reaktivsysteme ohne Zufuhr von Wärme verfestigen. Selbstverständlich kann man auch durch geeignete Dosierung der Lösungsmittel die thermischen Verfestigungszeit der Einkomponentensysteme erniedrigen, wobei noch eine ausreichende Lagerstabilität gegeben sein kann.

Weiterhin kann die Verfestigung der erfindungsgemäßen Einkomponenten-Reaktivsysteme auch durch Einwirkung hoher Scherkräfte herbeigeführt werden, z. B. mittels hochtouriger Rührwerke.

Erfindungsgemäß bevorzugt sind solche PU-Reaktivsysteme, welche höhermolekulare Polyamine B oder niedermolekulare aromatische Polyamine – als Kettenverlängerungsmittel C enthalten. Aus ihnen lassen sich hochwertige Beschichtungen, gegebenenfalls zellige Elastomere und Formteile herstellen, die gegebenenfalls eine integrale Dichteverteilung (zelliger Innenkern und dichtere Außenhaut) aufweisen.

Beispiel 1

1.1 Herstellung umhüllter Polyisocyanate nach dem Stand der Technik

100 Teile eines aromatischen Aminopolyethers auf Basis eines Polyoxypropylenetherdiols (Molekulargewicht 200)/Toluylendiisocyanat-2,4 (Molverhältnis 1:2), hergestellt nach dem Verfahren gemäß DE-A-2 948 419, mit einer Aminzahl = 48,0 und einem Molekulargewicht von 2334, × Teile 4,4′-Diamino-3,3′-dimethyldicyclohexylmethan (DADMD) als Komponente (c), 16,6 Teile feinkörniges dimeres 2,4-Diisocyanatotoluol (TT).

Die in untenstehender Tabelle 1 aufgeführten Mengen an DADMD werden im Aminopolyether gelöst, und in dieser Mischung wird das feinteilige TT suspendiert. Nach 1stündigem Entgasen bei 50 °C werden die Suspensionen des an der Oberfläche mit Polyharnstoff umhüllten, feinteiligen Diisocyanats in dem Aminopolyether abgefüllt und bei Raumtemperatur bzw. bei 50 °C gelagert. Es wurde festgestellt, daß in der Polyurethan-Reaktivmischung Anteile des DADMD noch frei, d. h. unreagiert vorliegen. Es sind dies bei Raumtemperaturlagerung nach etwa 4 Wochen etwa 5/6 bis 6/7 der eingesetzten Diaminmenge, bei 50 °C Lagerung (24 Stunden) sind etwa 50% umgesetzt.

1.2 Erfindungsgemäßes Verfahren

In Anteile der nach 1.1 hergestellten Suspensionen werden (nach einer Lagerzeit von 4 Wochen bei Raumtemperatur bzw. 50 °C) die angegebenen Mengen an 2,4-Toluylen-diisocyanat (TDI) in einem Molverhältnis TDI zu DMDAD von etwa 1:1 eingemischt. In der Tabelle 1 werden die nach einem Tag Lagerung bei Raumtemperatur bestimmten Aufdickungstemperaturen (im Vergleich zu Aufdickungstemperaturen ohne Zusatz von TDI) wiedergegeben.

1.3 Ergebnisse nach Stand der Technik

Werden die in der Tabelle aufgeführten Einkomponenten-Reaktivmassen gemäß 1.1 in 5-1-Formen (Blecheimer) bei 120 °C Ausheiztemperatur verfestigt, so dauert die Verfestigung sehr lange. Die dadurch bedingten, störenden Nebeneffekte, z. B. stetige Erhöhung des Aufdickungspunktes des flüssigen Anteils im Inneren des Formkörpers, treten um so stärker auf, je höher die ursprüngliche Menge an Verbindung (c) war.

1.4 Ergebnisse mit erfindungsgemäßen Verfahrensprodukten

Nach Zusatz der in der Tabelle angegebenen Mengen an TDI weisen die Reaktivsysteme erniedrigte Aufdickungstemperaturen auf. Die Lagerstabilität bei Raumtemperatur bleibt aber erhalten. Nach Verfestigung bei 120 °C erhält man fehlerfreie, großvolumige Formkörper (zylindrische 5-kg-Blöcke).

Durch Eingießen der erfindungsgemäßen Einkomponenten-Reaktivmischungen in mit Trennmitteln behandelte, flache, offene Gießformen und Verfestigung durch 8stündiges Tempern bei 120 °C werden hochwertige Elastomerprüfplatten erhalten, die die folgenden mechanischen Eigenschaften aufweisen:

| | nach DIN | |
|---|---|---|
| Shore-Härte A | 53 505 | 93 bis 94 |
| Zugfestigkeit (MPa) | 53 504 | 14 bis 17 |
| Reißdehnung (%) | 53 504 | 420 bis 470 |
| Weiterreißfestigkeit (kN/m) | 53 505 | 25 bis 27 |
| Elastizität (%) | 53 512 | 49 bis 51 |

Tabelle 1

| Ansatz Nr. | Vergleich (Beispiel 1.1) DMDAD (×, in Gew.-Teilen | Lagertemperatur der EK-RM (4 Wochen Lagerzeit) | ADT in °C | erfindungsgemäß (Beispiel 1.2) TDI (Gew.-Teile) | ADT (nach 1 Tag Lagerung bei Raumtemperatur) (°C) |
|---|---|---|---|---|---|
| 1a | 0,2 | Raumtemperatur | 80 | 0,146 | 54 |
| 1b | 0,2 | 50 °C | 95 | 0,146 | 70 |
| 2a | 0,3 | Raumtemperatur | 90 | 0,219 | 54 |
| 2b | 0,3 | 50 °C | 110 | 0,219 | 78 |
| 3a | 0,4 | Raumtemperatur | 100 | 0,292 | 83 |
| 3b | 0,4 | 50 °C | 115 | 0,292 | 88 |

EK-RM = Einkomponenten-Reaktivgießmasse (laut Rezeptur)
ADT = Aufdickungstemperatur (Temperatur des spontanen Beginns der Verfestigung)

Beispiel 2

Eine nach Beispiel 1 unter Verwendung von 0,3 Teilen Diamin (DADMD) hergestellte Suspension wird mit verschiedenen Diisocyanaten nachbehandelt.

Rezeptur:

100 Teile aromatischer Aminopolyether nach Beispiel 1, 0,3 Teile DADMD, 16,6 Teile TT.

Alle Ansätze sind bei Raumtemperatur lagerstabil. Ansätze 1 bis 3 härten beim allmählichen Erwärmen auf 120 °C in 5-Liter-Formen rasch und gleichmäßig durch; Ansatz 4 bleibt sehr lange flüssig und weist nach 3stündiger Lagerung bei 120 °C im Kern in Form eine auf 115 °C gestiegene Aufdickungstemperatur auf.

Tabelle 2

| Verbindung (d) (Teile) | Molverhältnis (d):(c) | Aufdickungstemperatur (nach 1 Woche Lagerung bei Raumtemperatur) | Viskosität der Einkomponenten-Gießmasse (Pa·sec) nach Herstellung | nach 1 Woche bei RT |
|---|---|---|---|---|
| 0,11 TDI | 0,5 | 75 | 24 (fl.) | 24 (fl.) |
| 0,29 TDI | 1,0 | 69 | 25 (fl.) | 25 (fl.) |
| 0,35 TDI | 1,6 | 64 | 100 (thixotrop) | 80 (thixotrop) |
| 0,14 IPDI | 0,5 | 73 | 24 (fl.) | 24 (fl.) |
| 0,28 IPDI | 1,0 | 64 | 33 (fl.) | 28 (fl.) |
| 0,35 IPDI | 1,2 | 72 | 38 (thixotrop) | 42 (thixotrop) |
| 0,16 HMDI | 0,5 | 84 | 25 (fl.) | 25 (fl.) |
| 0,33 HMDI | 1,0 | 82 | 30 (fl.) | 88 (fl.) |
| 0,563 HMDI | 1,7 | 86 | 46 (thixotrop) | 32 (thixotrop) |
| ohne (Vergleich) | 0 | 90 | 24 | 24 |

HMDI = 4,4'-Diisocyanato-dicyclohexylmethan

Beispiel 3

3.1 Vergleich

100 Teile eines Polyoxypropylenetherdiols vom Molekulargewicht 2000, 8,9 Teile 2,4-/2,6-(65/35)-Diamino-3,5-diethyltoluol und 0,5 Teile 2,5-Diamino-2,5-dimethylhexan (als Komponente c) werden vermischt und darin 38,3 Teile feinteiliges TT suspendiert. Zuletzt werden 0,2 Teile Pb-II-octoat und 0,4 Teile Sn-II-octoat gelöst. Man erhält eine bis 50 °C beliebig lange lagerfähige Einkomponentenmischung mit einer Viskosität von 1400 mPa·s bei 22 °C , die nach Hitzeverfestigung in einer 1-cmstarken Schicht und anschließender, 8stündiger Temperung bei 120 °C ein Elastomeres mit den folgenden mechanischen Eigenschaften ergibt:

| | |
|---|---|
| Shore-Härte A | 92 |
| Zugfestigkeit (MPa) | 11 |
| Reißdehnung (%) | 180 |
| Weiterreißfestigkeit (kN/m) | 17 |
| Elastizität (%) | 48 |

Beim Versuch, einen zylindrischen 500-g-Formkörper durch Ausheizen der Gießmasse in einer Form (Blechdose) herzustellen, steigt die Aufdikkungstemperatur auf 118 °C an.

Die vollständige Verfestigung bis in den Kern des Formkörpers dauert sehr lange, und es treten die beschriebenen Störungen, d.h. Inhomogenitäten auf.

3.2 bis 3.4 Erfindungsgemäßes Verfahren

Setzt man vor der Verfestigung der Suspension die in der Tabelle 3 angegebenen Isocyanate zu, so verläuft die Hitzeverfestigung zügig bei praktisch konstanten Aufdickungstemperaturen, und man erhält Formkörper ohne Störungen.

Tabelle 3

| Versuch Nr. | zugesetzte Isocyanate (d) | Molverhältnis (d):(c) | Aufdickungstemperatur nach 1 Tag Lagerung bei RT (°C) | Verfestigung eines 500-g-Formkörpers |
|---|---|---|---|---|
| 3.1 | | | von 68 ansteigend | bis zur Verfestigung in den Kern sehr langsam; Aufdickungstemperatur auf 118 °C ansteigend (etwa 8 Std. Ausheiztemperatur) |

| Versuch Nr. | zugesetzte Isocyanate (d) | Molverhältnis (d):(c) | Aufdickungstemperatur nach 1 Tag Lagerung bei RT (°C) | Verfestigung eines 500-g-Formkörpers |
|---|---|---|---|---|
| 3.2 | 0,60 Teile TDI | 1,0 | 40 | sehr schnell (15'/120 °C) |
| 3.3 | 0,77 Teile IPDI | 1,0 | 62 | schnell (25'/120 °C) |
| 3.4 | 4,4'-Diisocyanato-dicyclohexylmethan | 1,0 | 68 | schnell (30'/120 °C) |

Beispiel 4

4.1 Vergleich

In 100 Teile eines aromatischen Aminopolyethers nach Beispiel 1 werden 2,0 Teile 4,4'-Diamino-3,3'-dimethyldicyclohexylamin (als Komponente c) gelöst und 18 Teile 3,3'-Diisocyanato-4,4'-dimethyl-N,N'-diphenylharnstoff in feinteiliger Form eingerührt. Die Suspension wird zur Zerkleinerung des ungemahlenen Harnstoffdiisocyanats durch eine Korundscheibenmühle mit 0,25 mm Mahlspalt gegeben. Infolge der dicken Umhüllung des festen Isocyanats tritt auch unter den scharfen Mahlbedingungen (durch Reibungshitze Erwärmung bis auf etwa 100 °C) keine Polyadditionsreaktion in der Einkomponentenmischung ein. Die Aufdickungstemperatur der Mischung (168 °C) ist jedoch für praktische Zwecke zu hoch. Bei längerem Erwärmen auf 180 °C tritt eine Verfestigung des Einkomponenten-Reaktivsystems zu einem (minderwertigen) Elastomer ein.

4.2 Erfindungsgemäßes Verfahren

Durch Zusatz von 1,86 Teilen Isophorondiisocyanat zu 120 Teilen der in 4.1 hergestellten gemahlenen Suspension erhält man eine Einkomponenten-Gießmasse mit einer Aufdickungstemperatur von 85 °C. Das Reaktivsystem läßt sich durch Verfestigung bei 120 °C bzw. bei 150 °C zu hochwertigen Elastomeren mit den folgenden mechanischen Eigenschaften umsetzen:

| | |
|---|---|
| Shore-Härte A | 93 |
| Zugfestigkeit (MPa) | 12,3 |
| Reißdehnung (%) | 200 |
| Weiterreißfestigkeit (kN/m) | 23 |
| Elastizität (%) | 49 |

Beispiel 5

5.1 Vergleich

Analog Beispiel 4 wird aus 100 Teilen des aromatischen Aminopolyethers von Beispiel 1, 2,0 Teilen 4,4'-Diamino-3,3'-dimethyl-cyclohexylmethan und 18,0 Teilen ungemahlenem, dimerem TT durch Mahlung in der beschriebenen Korundscheibenmühle einer Einkomponenten-Gießmischung mit einer Aufdickungstemperatur von 180 °C hergestellt. Erst durch Erhitzen auf 190 bis 200 °C entsteht hieraus ein in den Eigenschaften völlig ungenügendes Elastomer.

5.2 Erfindungsgemäßes Verfahren

Nach Zugabe von 3,74 Teilen IPDI pro 120 Teile der gemahlenen Einkomponentenmischung von 5.1 erhält man ein gießbares Reaktivsystem mit einer Aufdickungstemperatur von 94 °C. Die Mischung läßt sich durch Verfestigung und 8stündiges Tempern bei 120 °C zu einem hochwertigen Elastomer mit den folgenden Eigenschaften umsetzen:

| | |
|---|---|
| Shore-Härte A | 93 |
| Zugfestigkeit (MPa) | 16 |
| Reißdehnung (%) | 450 |
| Weiterreißfestigkeit (kN/m) | 26 |
| Elastizität (%) | 50 |

**Patentansprüche**

1. Verfahren zur Herstellung von Suspensionen von feinteiligen, durch eine Oberflächenhülle in ihrer Reaktivität retardierten Polyisocyanaten in Polyolen und/oder Polyaminen mit aromatischen Aminogruppen, indem man

(a) ein festes, feinteiliges Polyisocyanat suspendiert in

(b) einem oder mehreren Polyolen und/oder aromatischen Polyaminen mit Molekulargewichten von 400 bis 6000, gegebenenfalls Polyolen und/oder aromatischen Polyaminen mit Molekulargewichten von 60 bis 399 sowie gegebenenfalls Weichmachern und Lösungsmitteln, mit

(c) einer oder mehreren zwei- oder mehrfunktionellen Verbindungen mit primären und/oder sekundären aliphatischen Aminogruppen und/oder $-CO-NH-NH_2$-Gruppen, Hydrazin, Alkylhydrazinen, Guanidinen und/oder Amidinen mit einem Molekulargewicht von 32 bis 6000 in einer Menge von 0,1 bis 25 Äquivalent-% pro NCO-Gruppen der Komponente (a),

unter Ausbildung einer Oberflächenhülle um (a) umsetzt, dadurch gekennzeichnet, daß man der Suspension nach Ausbildung der Oberflächenhülle um (a) eine oder mehrere, gegenüber der Komponente (c) acylierend, alkylierend oder neutralisierend wirkende Verbindungen (d) bei Temperaturen unterhalb der Schmelztemperatur der Komponente (a) in einer Menge zusetzt, welche der noch in der Suspension enthaltenden Komponente (c) höchstens etwa äquivalent ist.

2. Verfahren nach Anspruch 1, dadurch gekennzeichnet, daß man als Komponente (d) Mono- und/oder Polyisocyanate, Säureanhydride, Pyrokohlensäureester, anorganische oder organische Säuren verwendet.

3. Verfahren nach Anspruch 2, dadurch gekennzeichnet, daß man als Polyisocyanate NCO-Prepolymere, Biuret-Polyisocyanate, trimerisierte und/oder carbodiimidisierte Polyisocyanate verwendet.

4. Verfahren nach Anspruch 2 oder 3, dadurch gekennzeichnet, daß man Diisocyanate verwendet.

5. Verfahren nach Ansprüchen 1 bis 4, dadurch gekennzeichnet, daß das $NCO/(NH_2+OH)$-Verhältnis der Komponenten (a), (b), (c) und (d) 0,8:1 bis 1,5:1 beträgt.

6. Suspensionen, erhältlich nach den Verfahren gemäß Ansprüchen 1 bis 5.

7. Suspensionen nach Anspruch 6, dadurch gekennzeichnet, daß sie einen Gehalt an freien NCO-Gruppen aufweisen, welcher 92 bis 99,7% der ursprünglich in Komponente (a) vorhandenen NCO-Gruppen entspricht.

8. Verwendung von Suspensionen nach anspruch 6 oder 7 zur Herstellung von Polyurethanen.

9. Lagerstabile Einkomponenten-Reaktivsysteme, bestehend aus Suspensionen gemäß Anspruch 6 oder 7, sowie gegebenenfalls Polyurethankatalysatoren, üblichen Hilfs- und Zusatzstoffen, höhermolekularen Polyolen, höhermolekularen aromatischen Polyaminen und Kettenverlängerungsmitteln.

**Claims**

1. A process for the production of suspensions of finely divided polyisocyanates, retarded in their reactivity by a surface coating, in polyols and/or polyamines containing aromatic amino groups by reacting

(a) a solid finely divided polyisocyanate suspended in

(b) one or more polyols and/or aromatic polyamines having molecular weights of 400 to 6,000, optionally polyols and/or aromatic polyamines having molecular weights of 60 to 399 and, optionally, plasticizers and solvents, with

(c) one or more compounds having a functionality of two or more and containing primary and/or secondary aliphatic amino groups and/or –CO–NH–NH-groups, hydrazine, alkyl hydrazines, guanidines and/or amidines having a molecular weight of 32 to 6,000 in a quantity of 0.1 to 25 equivalent-% per NCO groups of component (a),

to form a surface coating around (a), characterized in that, after formation of the surface coating around (a), one or more compounds (d) having an acylating, alkylating or neutralizing effect on component (c) are added to the suspension at temperatures below the melting temperature of component (a) in a quantitiy which is at most substantially equivalent to component (c) still present in the suspension.

2. A process as claimed in claim 1, characterized in that mono- and/or polyisocyanates, acid anhydrides, pyrocarbonic acid esters, inorganic or organic acids are used as component (d).

3. A process as claimed in claim 2, characterized in that NCO prepolymers, biurent polyisocyanates, trimerized and/or carbodiimidized polyisocyanates are used as the polyisocyanates.

4. A process as claimed in claim 2 or 3, characterized in that diisocyanates are used.

5. A process as claimed in claims 1 to 4, characterized in that the $NCO/(NH_2+OH)$ ratio of components (a), (b), (c) and (d) is from 0.8:1 to 1.5:1.

6. Suspensions obtainable by the process claimed in claims 1 to 5.

7. Suspensions as claimed in claim 6, characterized in that they have a content of free NCO groups which corresponds to 92 to 99.7% of the NCO groups originally present in component (a).

8. The use of the suspensions claimed in claim 6 or 7 for the production of polyurethanes.

9. Storable one-component reactive systems consisting of the suspensions claimed in claim 6 or 7 and, optionally, polyurethane catalysts, standard auxiliaries and additives, relatively high molecular weight polyols, relatively high molecular weight aromatic polyamines and chain-extending agents.

**Revendications**

1. Procédé pour préparer des suspensions de polyisocyanates en fines particules, dont la réactivité a été retardée par une enveloppe superficielle, dans des polyols et/ou des polyamines comportant des groupes amino, selon lequel on fait réagir, avec formation d'une enveloppe superficielle autour de (a)

(a) un polyisocyanate solide, en fines particules, en suspension dans

(b) un ou plusieurs polyols et/ou polyamines aromatiques ayant des poids moléculaires allant de 400 à 6000, éventuellement des polyols et/ou des polyamines aromatiques ayant des poids moléculaires allant de 60 à 399, ainsi qu'éventuellement des plastifiants et des solvants, avec

c) un ou plusieurs composés, comportant deux ou plus de deux groupes fonctionnels et comportant des groupes amino aliphatiques primaires et/ou secondaires et/ou des groupes $-CO-NH-NH_2$, l'hydrazine, des alkylhydrazines, des guanidines et/ou des amidines ayant un poids moléculaire allant de 32 à 6000, que l'on utilise en une quantité de 0,1 à 25% d'équivalent de groupes NCO du composant (a),

procédé caractérisé en ce que, après formation de l'enveloppe superficielle entourant (a), on ajoute à la suspension, à des températures inférieures à la température de fusion du composant (a), un ou plusieurs composés (d) exerçant sur le composant (c) une action d'acylation, d'alkylation ou de neutralisation, et que l'on ajoute en une quantité qui est au maximum approximativement équivalente au composant (c) encore contenu dans la suspension.

2. Procédé selon la revendication 1, caractérisé en ce qu'on utilise comme composant (d) des monoisocyanates et/ou des polyisocyanates, des anhydrides d'acide, des esters de l'acide pyrocarbonique, des acides minéraux ou organiques.

3. Procédé selon la revendication 2, caractérisé en ce qu'on utilise comme polyisocyanates des prépolymères contenant des groupes NCO, des polyisocyanates de biuret, des polyisocyanates trimérisés et/ou carbodiimidés.

4. Procédé selon la revendication 2 ou 3, caractérisé en ce qu'on utilise des diisocyanates.

5. Procédé selon les revendications 1 à 4, caractérisé en ce que le rapport $NCO/(NH_2+OH)$ des composants (a), (b), (c) et (d) est de 0,8:1 à 1,5:1.

6. Suspensions, que l'on peut obtenir par le procédé selon les revendications 1 à 5.

7. Suspensions selon la revendication 6, caractérisé en ce qu'elles présentent une teneur en des groupes NCO libres correspondant à 92 à 99,7% des groupes NCO présents à l'origine dans le composant (a).

8. Utilisation des suspensions selon la revendication 6 ou 7, pour la production de polyuréthanes.

9. Systèmes réactifs à un composant, stables au magasinage, consistant en des suspensions selon la revendication 6 ou 7, ainsi qu'éventuellement en des catalyseurs de production de polyuréthannes, des adjuvants et usuels, des polyols à poids moléculaire élevé, des polyamines aromatiques à poids moléculaire élevé et des agents d'allongement des chaînes.